# EUROPEAN PATENT APPLICATION

(11) **EP 3 412 931 A1**
(43) Date of publication of application: **12.12.2018**
(21) Application number: 17747206.5
(22) Date of filing: 19.01.2017
(51) Int. Cl.: F16H 9/18, F16C 11/06

(54) **BELT-TYPE CONTINUOUSLY VARIABLE TRANSMISSION**

(30) Priority: 02.02.2016 JP 2016017773
(71) Applicant: Musashi Seimitsu Industry Co., Ltd., Aichi 441-8560 (JP)
(72) Inventor: FUJIKAWA, Kazutoshi, Toyohashi-shi Aichi 441-8560 (JP); OKAMOTO, Teruhisa, Toyohashi-shi Aichi 441-8560 (JP); YOSHIDA, Yoshihiro, Toyohashi-shi Aichi 441-8560 (JP)
(74) Representative: Tiburzi, Andrea
(86) International application number: PCT/JP2017/001712
(87) International publication number: WO 2017/135047

(57) **Abstract**

A belt-type continuously variable transmission is provided in which a ball joint (13) has a joint housing (25) that is provided in a threaded shaft (19) and a ball stud (26) that extends from an arm (12) and is swingably supported on the joint housing (25), the ball stud (26) is provided with a ball shaft portion (26a) that has a spherical outer peripheral face and a cylindrical shaft portion (26b) that is coaxial with the ball shaft portion (26a), has a smaller diameter than the ball shaft portion (26a), and has a cylindrical outer peripheral face, and the joint housing (25) is provided with a ball support face (25a) into which the ball shaft portion (26a) is fitted and a stopper face (25b) that abuts against an outer peripheral face (26b') of the cylindrical shaft portion (26b) and restricts a rotational angle around an axis (X1) of the threaded shaft (19) to a fixed angle α. Thus it is possible to provide a belt-type continuously variable transmission that can appropriately convert the rotational power of a motor into the thrust of a threaded shaft to thus drive a pulley, has a reduced number of components, and has a simple structure.

## Description

### TECHNICAL FIELD

The present invention relates to an improvement of a belt-type continuously variable transmission that includes a drive pulley that is supported on an input shaft, a driven pulley that is supported on an output shaft, a belt that is wound around the two pulleys, and an actuator that can change a groove width of either one of the two pulleys.

### BACKGROUND ART

With regard to such a belt-type continuously variable transmission, as disclosed in Patent Document 1 below, an arrangement in which the transmission includes an arm that transmits the driving force of an actuator to a pulley, and the arm and an output rod of the actuator are linked via a ball joint is already known.

### RELATED ART DOCUMENTS

### PATENT DOCUMENTS

Patent Document 1: Japanese Patent Application Laid-open No. 2015-92100

### SUMMARY OF THE INVENTION

### PROBLEMS TO BE SOLVED BY THE INVENTION

In order to convert the rotational power of a motor into a thrust of the output rod, the actuator disclosed in Patent Document 1 above has a nut member that rotates upon receiving the rotational power of the motor and a threaded shaft that converts the rotation of the nut member into linear motion by means of a male thread screwed into the nut member, this threaded shaft acting as the output rod. However, in this case, due to the arm and the threaded shaft being linked via the ball joint, the threaded shaft rotates together with rotation of the nut member, and the rotational power of the motor cannot reliably be converted into a thrust of the threaded shaft, thereby preventing the pulley from being driven accurately.

Moreover, in the arrangement of Patent Document 1 above, since the ball joint is formed from a plurality of components such as a seat or a ball, the number of components is large, and the structure is complicated.

The present invention has been accomplished in light of such circumstances, and it is an object thereof to obtain a belt-type continuously variable transmission that can appropriately convert the rotational power of a motor into the thrust of a threaded shaft to thus drive a pulley, has a reduced number of components, and has a simple structure.

In order to attain the above object, according to a first aspect of the present invention, there is provided a belt-type continuously variable transmission comprising a drive pulley that is supported on an input shaft, a driven pulley that is supported on an output shaft, a belt that is wound around the two pulleys, an actuator that drives either one of the two pulleys to change a groove width of the pulley, and an arm that transmits a driving force of the actuator to the one pulley, the actuator having a nut member that rotates upon receiving a rotational power of a motor and a threaded shaft that converts a rotation of the nut member into linear motion by means of a male thread screwed into the nut member and drives the one pulley, and the arm and the threaded shaft being linked via a ball joint, wherein the ball joint has a joint housing that is provided in the threaded shaft and a ball stud that extends from the arm and is swingably supported on the joint housing, the ball stud is provided with a ball shaft portion that has a spherical outer peripheral face and a cylindrical shaft portion that is coaxial with the ball shaft portion, has a smaller diameter than the ball shaft portion, and has a cylindrical outer peripheral face, and the joint housing is provided with a ball support face into which the ball shaft portion is fitted and a stopper face that abuts against an outer peripheral face of the cylindrical shaft portion and restricts a rotational angle around an axis of the threaded shaft to a fixed angle α.

It should be noted that the rotational angle around the axis of a threaded shaft referred to here means the rotational angle of the axis of a joint housing with respect to the axis of a ball stud.

Further, according to a second aspect of the present invention, in addition to the first aspect, the stopper face is an inclined face that is inclined with respect to an axis of the joint housing and abuts against the outer peripheral face of the cylindrical shaft portion in a line contact state.

Furthermore, according to a third aspect of the present invention, in addition to the first or second aspect, the stopper face is disposed on the arm side with respect to the ball support face as a tapered face whose diameter increases in going toward an outside of the joint housing.

Moreover, according to a fourth aspect of the present invention, in addition to any one of the first to third aspects, the ball support face is a cylindrical face that has a width in the axis direction of the joint housing.

Further, according to a fifth aspect of the present invention, in addition to the fourth aspect, the stopper face is a curved face that bulges toward an inner peripheral side of the joint housing.

Furthermore, according to a sixth aspect of the present invention, in addition to any one of the first to fifth aspects, a rotation-preventing part that restricts the rotational angle around the axis of the threaded shaft to a fixed angle β by abutting against the joint housing in a state in which the ball stud is not fitted into the joint housing is provided on a unit case that forms an external shell of the actuator.

Moreover, according to a seventh aspect of the present invention, in addition to the sixth aspect, the angle α and the angle β are set so as to satisfy α < β.

### EFFECTS OF THE INVENTION

In accordance with the first aspect of the present invention, when the nut member is rotated by operation of the actuator, the joint housing also attempts to rotate in response to the threaded shaft rotating, but since the stopper face provided on the inner periphery of the joint housing abuts against the cylindrical shaft portion of the ball stud to thus restrict rotation of the joint housing, rotation of the threaded shaft is also restricted, and the threaded shaft is prevented from rotating together with the rotation of the nut member. As a result, it is possible to reliably convert the rotational power of the motor into a thrust of the threaded shaft and drive the pulley. Furthermore, due to the stopper face and the cylindrical shaft portion abutting against each other, the reaction force acts in a direction orthogonal to the axis of the ball stud, the reaction force does not act in the axis direction of the ball stud, and it is therefore possible to prevent the ball stud from falling out of the joint housing. Moreover, since the ball stud can swing over a range in which the cylindrical shaft portion does not abut against the stopper face, it is possible to absorb manufacturing tolerances of components forming the actuator, errors when mounting the actuator on the transmission case, etc. and it is possible by absorbing vibration of the arm caused by vibration of the pulley, etc. to prevent any occurrence of vibrational noise and improve the durability of the actuator. Furthermore, since the maximum swing angle of the ball stud is restricted by abutment between the cylindrical shaft portion and the stopper face, any unnecessary increase of the lateral pressure component acting on the threaded shaft from the ball stud can be suppressed, thus ensuring smooth movement of the threaded shaft.

Moreover, since the ball shaft portion is provided directly on the ball stud, the ball support face is provided directly on the joint housing, and it is unnecessary to employ a separate ball or seat, the number of components can be reduced, thus lowering the production cost. Moreover, it is possible by supporting the ball shaft portion of the ball stud directly on the ball support face of the joint housing to increase the diameter of the ball shaft portion to thus ensure a wide contact area between the ball support face and the ball shaft portion, and it is thereby possible to suppress the plane pressure of a thrust transmitting part between the ball support face and the ball shaft portion.

Furthermore, in accordance with the second aspect of the present invention, since the stopper face is an inclined face that is inclined with respect to the axis of the joint housing and abuts against the outer peripheral face of the cylindrical shaft portion in a line contact state, the plane pressure of the abutment part can be suppressed, and the wear resistance of the abutment part can be enhanced.

Moreover, in accordance with the third aspect of the present invention, since the stopper face is a tapered face whose diameter increases in going toward the outside of the joint housing and is disposed on the arm side with respect to the ball support face, when ball stud is fitted into the joint housing, the stopper face functions as a guide, and the ball stud can easily be fitted into the joint housing.

Furthermore, in accordance with the fourth aspect of the present invention, since the ball support face is a cylindrical face having a width in the axis direction of the joint housing, even when the ball shaft portion is displaced in the axis direction of the ball stud due to vibration of the arm caused by vibration of the pulley, etc., the ball shaft portion can be reliably supported within the ball support face, and transmission of thrust between the ball support face and the ball shaft portion can be carried out reliably.

Moreover, in accordance with the fifth aspect of the present invention, since the stopper face is a curved face that bulges toward the inner peripheral side of the joint housing, even when the ball shaft portion is displaced in the axis direction due to vibration of the arm caused by vibration of the pulley, etc., the outer peripheral face of the cylindrical shaft portion does not abut against the edge of the stopper face but abuts against a face within the curved face, thereby enhancing the wear resistance of the abutment part.

Furthermore, in accordance with the sixth aspect of the present invention, since the unit case is provided with the rotation-preventing part, which restricts the rotational angle around the axis of the threaded shaft to the fixed angle β by abutting against the joint housing in a state in which the ball stud is not fitted into the joint housing, fitting of the ball stud into the joint housing becomes easy, it is possible to prevent the threaded shaft from being moved uncontrollably in the rotational direction due to vibration, etc. when handling the actuator during transport, etc., and it is possible to prevent this uncontrolled movement from causing the threaded shaft to fall out of the nut member.

Moreover, in accordance with the seventh aspect of the present invention, by setting the angle α and the angle β so as to satisfy α < β, since the joint housing does not abut against the rotation-preventing part before the stopper face abuts against the cylindrical shaft portion when the nut member is rotated by operation of the actuator and the threaded shaft is operated, it is possible to avoid any occurrence of unnecessary frictional resistance, which interferes with the movement of the threaded shaft, that is caused by contact between the joint housing and the rotation-preventing part.

### BRIEF DESCRIPTION OF DRAWINGS

[FIG. 1] FIG. 1 is a plan sectional view of a belt-type continuously variable transmission in an embodiment of the present invention. (first embodiment)
[FIG. 2] FIG. 2 is a side view of the belt-type continuously variable transmission in the embodiment of the present invention (view in the direction of arrow 2 in Fig. 1). (first embodiment)
[FIG. 3] FIG. 3 is an enlarged view of a portion shown by arrow 3 in FIG. 1. (first embodiment)
[FIG. 4] FIG. 4 is a sectional view along line 4-4 in FIG. 3. (first embodiment)
[FIG. 5] FIG. 5 is a sectional view along line 4-4 in FIG. 3 showing a state before a ball stud is fitted into a joint housing in which a back face of the joint housing abuts against a rotation-preventing part. (first embodiment)

### EXPLANATION OF REFERENCE NUMERALS AND SYMBOLS

2 Input shaft
3 Output shaft
4 Drive pulley
5 Driven pulley
6 Belt
8 Actuator
12 Arm
13 Ball joint
14 Unit case
18 Motor
19 Threaded shaft
19a Male thread
21 Nut member
25 Joint housing
25a Ball support face
25b Stopper face
26 Ball stud
26a Ball shaft portion
26b Cylindrical shaft portion
26b' Outer peripheral face
28 Rotation-preventing part
X1 Axis of threaded shaft
X2 Axis of joint housing
α Rotational angle around axis of threaded shaft restricted by stopper face
β Rotational angle around axis of threaded shaft restricted by rotation-preventing part

### MODES FOR CARRYING OUT THE INVENTION

An embodiment in which a belt-type continuously variable transmission of the present invention is applied to a vehicle such as a two-wheeled motor vehicle is explained below by reference to the attached drawings.

### FIRST EMBODIMENT

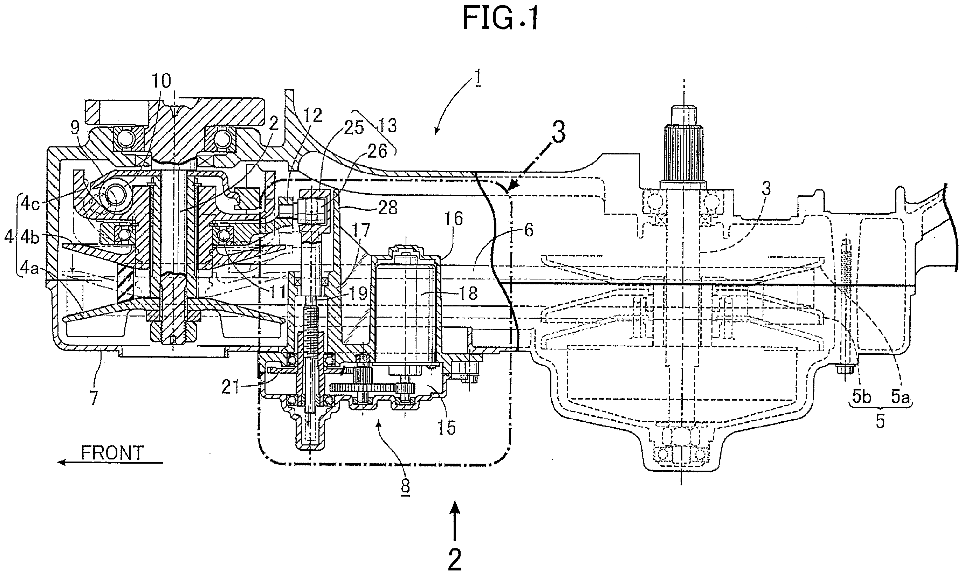

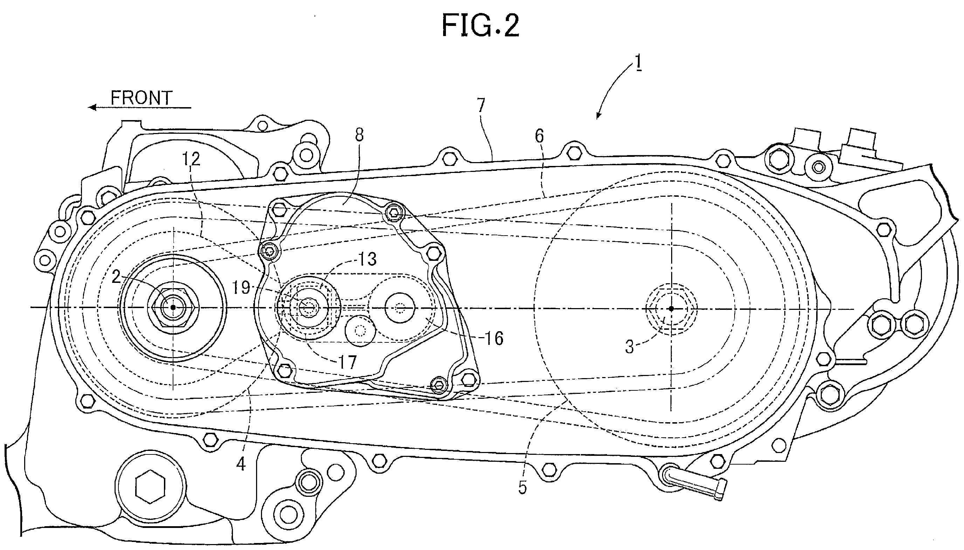

FIG. 1 is a plan sectional view of a belt-type continuously variable transmission related to the present invention, and FIG. 2 is a view in the direction of arrow 2 in Fig. 1.

As shown in FIG. 1 and FIG. 2, the belt-type continuously variable transmission 1 includes an input shaft 2 to which power is transmitted from a power source such as an engine or a motor, which is not illustrated, an output shaft 3 that is parallel to the input shaft 2 and transmits power to a wheel, which is not illustrated, a drive pulley 4 that is supported on the input shaft 2, a driven pulley 5 that is supported on the output shaft 3, a belt 6 that is wound around the two pulleys 4 and 5, a transmission case 7 that houses the two pulleys 4 and 5 and the belt 6, and an actuator 8 that is mounted on the transmission case 7 and can change the groove width of the drive pulley 4, the belt-type continuously variable transmission 1 being installed in a vehicle such as a two-wheeled motor vehicle. The actuator 8 may be one that changes the groove width of the driven pulley 5.

The drive pulley 4 is formed from a drive-side fixed sheave 4a that is fixed to the input shaft 2 and a drive-side movable sheave 4b that is supported on the input shaft 2 and is movable in the axial direction of the input shaft 2, and the driven pulley 5 is formed from a driven-side fixed sheave 5a that is fixed to the output shaft 3 and a driven-side movable sheave 5b that is supported on the output shaft 3 and is movable in the axial direction of the output shaft 3.

A ramp plate 9 is fixed to the input shaft 2 behind the drive-side movable sheave 4b, and a plurality of centrifugal weights 10 are retained between the drive-side movable sheave 4b and the ramp plate 9. When the input shaft 2 rotates and a centrifugal force corresponding to the rotational speed thereof acts on the centrifugal weight 10, the centrifugal weight 10 moves radially outward along a cam face 4c of the drive-side movable sheave 4b, the drive-side movable sheave 4b is moved toward the drive-side fixed sheave 4a side, and the winding radius of the belt 6 increases.

Furthermore, an arm 12 is relatively rotatably linked to the drive side movable sheave 4b via a bearing 11, and the actuator 8, which drives the drive side movable sheave 4b in the axial direction of the input shaft 2 via the arm 12, is connected to the arm 12 via a ball joint 13.

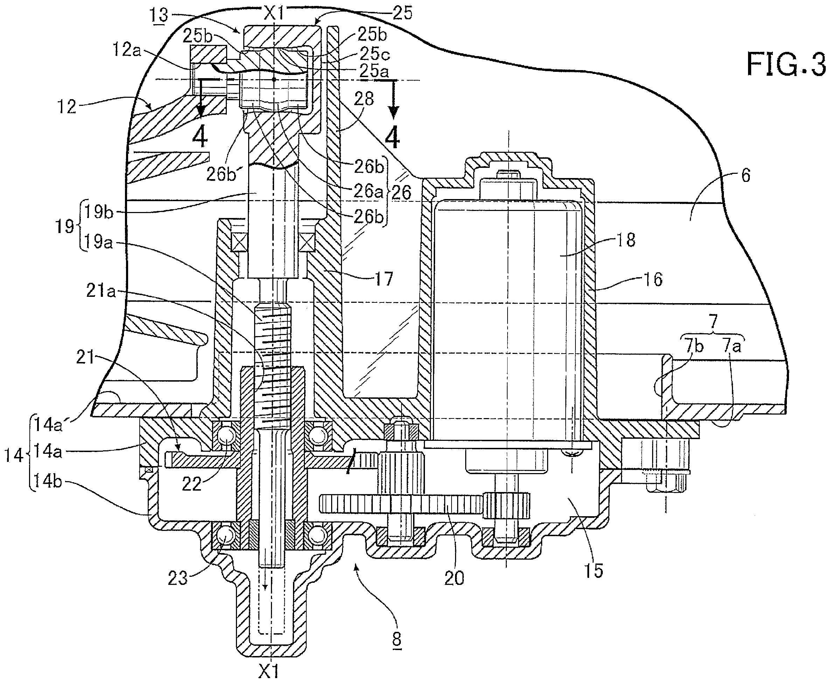

Referring in addition to FIG. 3, which is an enlarged view of part shown by arrow 3 in FIG. 1, the actuator 8 includes a unit case 14 formed from a first case half body 14a and a second case half body 14b forming an external shell thereof, a flat housing space 15 being defined between the first and second case half bodies 14a and 14b. An outer wall face 14a' of the first case half body 14a that is on the side opposite to the second case half body 14b is formed as a mounting face that is mounted on a mounting portion 7a formed on the transmission case 7, and first and second bulge parts 16 and 17 of the first case half body 14a bulge into the transmission case 7 from the outer wall face 14a'.

A motor 18 is disposed within the first bulge part 16, a threaded shaft 19 is disposed within the second bulge part 17, and an opening portion 7b is formed in the mounting portion 7a of the transmission case 7, the opening portion 7b being for the first and second bulge parts 16 and 17 to be inserted into the transmission case 7. Furthermore, disposed within the housing space 15 are a reduction gear mechanism 20 for reducing the speed of the output of the motor 18 and a nut member 21 that is rotated by the motor 18 via the reduction gear mechanism 20.

The nut member 21 is pivotably supported on the first and second case half bodies 14a and 14b via bearings 22 and 23, and a screw feed mechanism for converting the rotation of the nut member 21 into linear motion of the threaded shaft 19 is formed by a female thread 21a formed on the inner periphery of the nut member 21 being screwed onto a male thread 19a formed on the threaded shaft 19. The threaded shaft 19 is slidably disposed within the second bulge part 17 so that an extremity portion 19b projects outward from the second bulge part 17, and due to the nut member 21 rotating upon receiving the rotational power of the motor 18 the threaded shaft 19 having the extremity portion 19a projecting from the second bulge part 17 moves back and forth along the axis of the nut member 21. The male thread 19a may be formed integrally with the threaded shaft 19 or may be formed as a separate body and integrated with the threaded shaft 19.

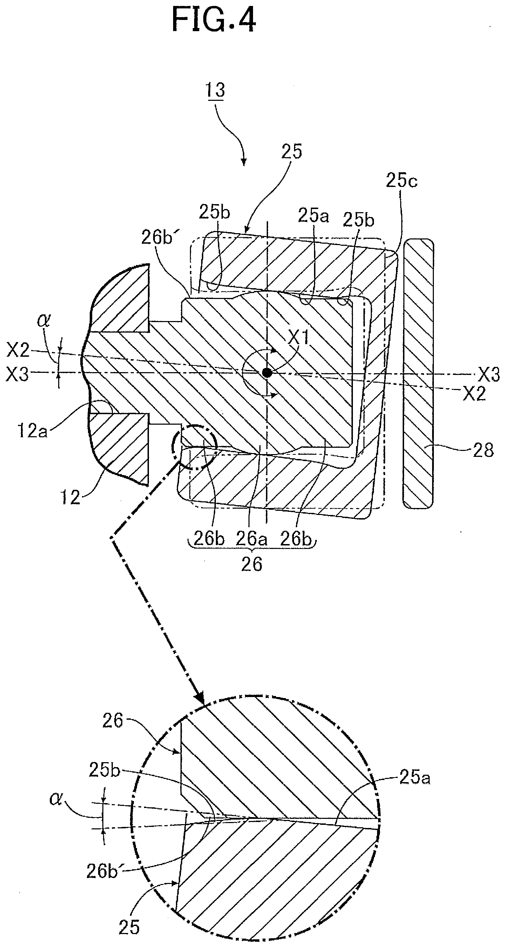

Referring in addition to FIG. 4, which is a view along arrowed line 4-4 in FIG. 3, a tubular joint housing 25 having an axis X2 orthogonal to an axis X1 of the threaded shaft 19 is provided on the extremity portion 19b of the threaded shaft 19, and the ball joint 13 is formed from the joint housing 25 and a ball stud 26 swingably supported on the joint housing 25.

With regard to the ball stud 26, a ball shaft portion 26a and cylindrical shaft portions 26b are connected so that the cylindrical shaft portions 26b are disposed on opposite sides of the ball shaft portion 26a, the ball stud 26 being fixedly provided on the arm 12 with one end side of the ball stud 26 fitted into a fitting hole 12a at the extremity of the arm 12, the ball shaft portion 26a on the other end side projecting from the arm 12 having a spherical outer peripheral face, and the cylindrical shaft portion 26b being coaxial with the ball shaft portion 26a, having a smaller diameter than the diameter of the ball shaft portion 26a, and having a cylindrical outer peripheral face. This ball stud 26 may be formed integrally with the arm 12.

A ball support face 25a is formed on the inner periphery of the joint housing 25, the ball shaft portion 26a of the ball stud 26 being removably fitted into the ball support face 25a. This ball support face 25a is formed into a cylindrical face having a width in the axis X2 direction of the joint housing 25 so that the ball shaft portion 26a is reliably supported within the ball support face 25a while maintaining intimate contact even when the ball shaft portion 26a is displaced in an axis X3 direction of the ball stud 26 within the joint housing 25, but the shape of the ball support face 25a is not particularly limited to such a cylindrical face.

Furthermore, a stopper face 25b is provided on the inner periphery of the joint housing 25 on opposite sides in the axial direction of the ball support face 25a so as to be continuous with the ball support face 25a, the stopper face 25b abutting against an outer peripheral face 26b' of the cylindrical shaft portion 26b to restrict the rotational angle around the axis X1 of the threaded shaft 19 (the rotational angle of the axis X2 of the joint housing 25 with respect to the axis X3 of the ball stud 26) to a fixed angle α. The stopper face 25b is formed into a curved face that is inclined only by the angle α with respect to the axis X2 and bulges toward the inner peripheral side of the joint housing 25 so that the plane pressure of an abutment part that abuts against the outer peripheral face 26b' of the cylindrical shaft portion 26b is suppressed even when the ball shaft portion 26a is displaced in the axis X3 direction of the ball stud 26.

The cylindrical shaft portion 26b and the stopper face 25b may be provided respectively only on one side of the ball shaft portion 26a and one side of the ball support face 25a that opposes the above. In this case, as in the present embodiment, when the stopper face 25b is disposed on the arm 12 side with respect to the ball support face 25a, the stopper face 25b becomes a large diameter tapered face that tapers toward the outside of the joint housing 25, and when the ball stud 26 is fitted into the joint housing 25 the stopper face 25b functions as a guide to thus enable the ball stud 26 to be easily fitted into the joint housing 25. As in the present embodiment, when the cylindrical shaft portion 26b and the stopper face 25b are provided on opposite sides of the ball shaft portion 26a and the ball support face 25a, compared with a case in which they are provided only on one side, it is possible to disperse the plane pressure of the abutment part, thereby enhancing the wear resistance of the abutment part.

Moreover, when the ball shaft portion 26a has a structure that prevents displacement in the axis X3 direction of the ball stud 26, it is possible merely by making the stopper face 25b an inclined face that is inclined only by the angle α with respect to the axis X2 of the joint housing 25 and abuts against the outer peripheral face 26b' of the cylindrical shaft portion 26b in a line contact state to suppress the plane pressure of the abutment part and enhance the wear resistance of the abutment part.

Furthermore, although a back face 25c (a face on the opposite side to the arm 12) of the joint housing 25 is sealed in order to prevent dirt from entering, instead of sealing, a lid may be provided, or it may be an open face if sealing is not necessary.

When the actuator 8 is mounted on the transmission case 7, the first and second bulge parts 16 and 17 of the first case half body 14a of the actuator 8 are inserted into the transmission case 7 via the opening portion 7b of the transmission case 7, the ball shaft portion 26a of the ball stud 26 extending from the extremity of the arm 12 is fitted into the ball support face 25a of the joint housing 25, and the unit case 14 of the actuator 8 is then fixed to the transmission case 7 so that the opening portion 7b of the transmission case 7 is covered with the outer wall face 14a' of the first case half body 14a. In this process, in a state before fitting the ball shaft portion 26a of the ball stud 26 into the ball support face 25a of the joint housing 25, the joint housing 25 can rotate freely around the axis X1 of the threaded shaft 19, and there is therefore a possibility that the direction of the axis X2 of the joint housing 25 will deviate greatly from the axis X3 of the ball stud 26 and the threaded shaft 19 will be moved uncontrollably by vibration, etc. when handling the actuator 8 during transport, etc. and will fall out of the nut member 21.

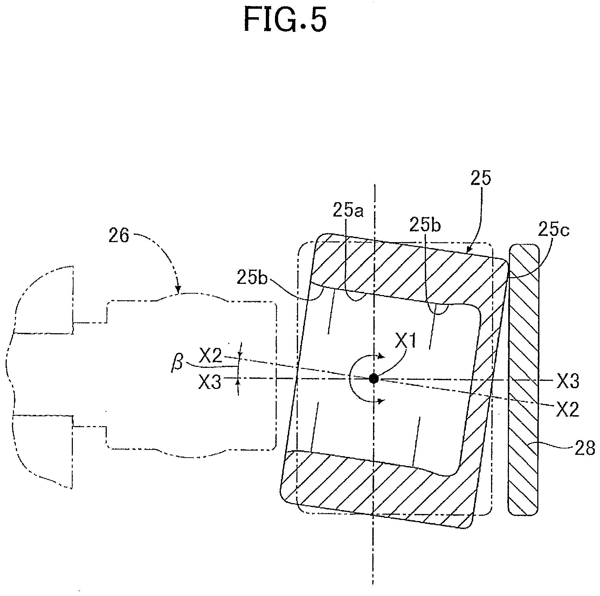

In the present embodiment, as shown in FIG. 5, which shows a state before the ball stud 26 is fitted into the joint housing 25, since, in a state in which the ball stud 26 has not been fitted into the joint housing 25, a rotation-preventing part 28 that abuts against the back face 25c of the joint housing 25 to thus restrict the rotational angle around the axis X1 of the threaded shaft 19 (the rotational angle of the axis X2 of the joint housing 25 with respect to the axis X3 of the ball stud 26 in a state in which the ball shaft portion 26a is fitted into the ball support face 25a) to a fixed angle β is projectingly provided at the extremity of the second bulge part 17 of the first case half body 14a, it becomes easy to fit the ball stud 26 into the joint housing 25 and it is possible to prevent the threaded shaft 19 from being moved uncontrollably in the rotational direction by vibration, etc. when handling the actuator 8 during transport, etc. and to prevent the threaded shaft 19 from falling out of the nut member 21 due to this uncontrolled movement.

Moreover, since the angle β is set so that α < β is satisfied and the joint housing 25 does not abut against the rotation-preventing part 28 before the stopper face 25b abuts against the cylindrical shaft portion 26b when rotating the nut member 21 by operation of the actuator 8 and moving the threaded shaft 19, it is possible to avoid any occurrence of unnecessary frictional resistance, which interferes with movement of the threaded shaft 19, that is caused by contact between the joint housing 25 and the rotation-preventing part 28.

The operation of this embodiment is now explained.

When the nut member 21 is rotated by operation of the actuator 8, the joint housing 25 also attempts to rotate in response to the threaded shaft 19 rotating, but since the stopper face 25b provided on the inner periphery of the joint housing 25 abuts against the cylindrical shaft portion 26b provided on the ball stud 26 to thus restrict rotation of the joint housing 25, rotation of the threaded shaft 19 is also restricted, and the threaded shaft 19 is prevented from rotating together with the rotation of the nut member 21. As a result, it is possible to reliably convert the rotational power of the motor 18 into a thrust of the threaded shaft 19 and drive the drive side movable sheave 4b of the drive pulley 4. Furthermore, due to the stopper face 25b and the outer peripheral face 26b' of the cylindrical shaft portion 26b abutting against each other, the reaction force acts in a direction orthogonal to the axis X3 of the ball stud 26, the reaction force does not act in the axis X3 direction of the ball stud 26, and it is therefore possible to prevent the ball stud 26 from falling out of the joint housing 25. Moreover, since the ball stud 26 can swing over a range in which the cylindrical shaft portion 26b does not abut against the stopper face 25b, it is possible to absorb manufacturing tolerances of components forming the actuator 8, errors when mounting the actuator 8 on the transmission case 7, etc. and it is possible by absorbing vibration of the arm 12 caused by vibration of the drive pulley 4, etc. to prevent any occurrence of vibrational noise and improve the durability of the actuator 8. Furthermore, since the maximum swing angle of the ball stud 26 is restricted by abutment between the cylindrical shaft portion 26b and the stopper face 25b, any unnecessary increase of the lateral pressure component acting on the threaded shaft 19 from the ball stud 26 can be suppressed, thus ensuring smooth movement of the threaded shaft 19.

Moreover, since the ball shaft portion 26a is provided directly on the ball stud 26, the ball support face 25a is provided directly on the joint housing 25, and it is unnecessary to employ a separate ball or seat, the number of components can be reduced, thus lowering the production cost. Moreover, it is possible by supporting the ball shaft portion 26a of the ball stud 26 directly on the ball support face 25a of the joint housing 25 to increase the diameter of the ball shaft portion 26a to thus ensure a wide contact area between the ball support face 25a and the ball shaft portion 26a, and it is thereby possible to suppress the plane pressure of a thrust transmitting part between the ball support face 25a and the ball shaft portion 26a.

Furthermore, since the stopper face 25b is an inclined face that is inclined with respect to the axis X2 of the joint housing 25 and abuts against the outer peripheral face 26b' of the cylindrical shaft portion 26b in a line contact state, the plane pressure of the abutment part can be suppressed, and the wear resistance of the abutment part can be enhanced.

Moreover, since the stopper face 25b is a tapered face whose diameter increases in going toward the outside of the joint housing 25 and is disposed on the arm 12 side with respect to the ball support face 25a, when ball stud 26 is fitted into the joint housing 25, the stopper face 25b functions as a guide, and the ball stud 26 can easily be fitted into the joint housing 25.

Furthermore, since the ball support face 25a is a cylindrical face having a width in the axis X2 direction of the joint housing 25, even when the ball shaft portion 26a is displaced in the axis X3 direction of the ball stud 26 due to vibration of the arm 12 caused by vibration of the drive pulley 4, etc., the ball shaft portion 26a can be reliably supported within the ball support face 25a, and transmission of thrust between the ball support face 25a and the ball shaft portion 26a can be carried out reliably.

Moreover, since the stopper face 25b is a curved face that bulges toward the inner peripheral side of the joint housing 25, even when the ball shaft portion 26a is displaced in the axis X3 direction of the ball stud 26 due to vibration of the arm 12 caused by vibration of the drive pulley 4, etc., the outer peripheral face 26b' of the cylindrical shaft portion 26b does not abut against the edge of the stopper face 25b but abuts against a face within the curved face, thereby enhancing the wear resistance of the abutment part.

Furthermore, since the unit case 14 is provided with the rotation-preventing part 28, which restricts the rotational angle around the axis X1 of the threaded shaft 19 to the fixed angle β by abutting against the back face 25c of the joint housing 25 in a state in which the ball stud 26 is not fitted into the joint housing 25, fitting of the ball stud 26 into the joint housing 25 becomes easy, it is possible to prevent the threaded shaft 19 from being moved uncontrollably in the rotational direction due to vibration, etc. when handling the actuator 8 during transport, etc., and it is possible to prevent this uncontrolled movement from causing the threaded shaft 19 to fall out of the nut member 21.

Moreover, by setting the angle α and the angle β so as to satisfy α < β, since the joint housing 25 does not abut against the rotation-preventing part 28 before the stopper face 25b abuts against the cylindrical shaft portion 26b when the nut member 21 is rotated by operation of the actuator 8 and the threaded shaft 19 is operated, it is possible to avoid any occurrence of unnecessary frictional resistance due to contact between the joint housing 25 and the rotation-preventing part 28.

An embodiment of the present invention is explained above, but the present invention is not limited to the above embodiment and may be modified in a variety of ways as long as the modifications do not depart from the spirit and scope thereof.

For example, the belt-type continuously variable transmission of the present invention is not limited to one that is mounted on a two-wheeled motor vehicle, and may be used in a vehicle of any mode.

## Claims

1. A belt-type continuously variable transmission comprising a drive pulley (4) that is supported on an input shaft (2), a driven pulley (5) that is supported on an output shaft (3), a belt (6) that is wound around the two pulleys (4, 5), an actuator (8) that drives either one of the two pulleys (4, 5) to change a groove width of said pulley, and an arm (12) that transmits a driving force of the actuator (8) to said one pulley, the actuator (8) having a nut member (21) that rotates upon receiving a rotational power of a motor (18) and a threaded shaft (19) that converts a rotation of the nut member (21) into linear motion by means of a male thread (19a) screwed into the nut member (21) and drives said one pulley, and the arm (12) and the threaded shaft (19) being linked via a ball joint (13),
wherein the ball joint (13) has a joint housing (25) that is provided in the threaded shaft (19) and a ball stud (26) that extends from the arm (12) and is swingably supported on the joint housing (25), the ball stud (26) is provided with a ball shaft portion (26a) that has a spherical outer peripheral face and a cylindrical shaft portion (26b) that is coaxial with the ball shaft portion (26a), has a smaller diameter than the ball shaft portion (26a), and has a cylindrical outer peripheral face, and the joint housing (25) is provided with a ball support face (25a) into which the ball shaft portion (26a) is fitted and a stopper face (25b) that abuts against an outer peripheral face (26b') of the cylindrical shaft portion (26b) and restricts a rotational angle around an axis (X1) of the threaded shaft (19) to a fixed angle α.

2. The belt-type continuously variable transmission according to Claim 1, wherein the stopper face (25b) is an inclined face that is inclined with respect to an axis (X2) of the joint housing (25) and abuts against the outer peripheral face (26b') of the cylindrical shaft portion (26b) in a line contact state.

3. The belt-type continuously variable transmission according to Claim 1 or Claim 2,
wherein the stopper face (25b) is disposed on the arm (12) side with respect to the ball support face (25a) as a tapered face whose diameter increases in going toward an outside of the joint housing (25).

4. The belt-type continuously variable transmission according to any one of Claim 1 to Claim 3, wherein the ball support face (25a) is a cylindrical face that has a width in the axis (X2) direction of the joint housing (25).

5. The belt-type continuously variable transmission according to Claim 4, wherein the stopper face (25b) is a curved face that bulges toward an inner peripheral side of the joint housing (25).

6. The belt-type continuously variable transmission according to any one of Claim 1 to Claim 5, wherein a rotation-preventing part (28) that restricts the rotational angle around the axis (X1) of the threaded shaft (19) to a fixed angle β by abutting against the joint housing (25) in a state in which the ball stud (26) is not fitted into the joint housing (25) is provided on a unit case (14) that forms an external shell of the actuator (8).

7. The belt-type continuously variable transmission according to Claim 6, wherein the angle α and the angle β are set so as to satisfy α < β.
